# EUROPÄISCHE PATENTSCHRIFT

(11) **EP 2 898 214 B1**
(45) Veröffentlichungstag und Bekanntmachung des Hinweises auf die Patenterteilung: **31.08.2016**
(21) Anmeldenummer: 13765290.5
(22) Anmeldetag: 14.09.2013
(51) Int. Cl.: F02M 69/04, F02M 61/18, F02B 23/10

(54) **KRAFTSTOFF-EINSPRITZSYSTEM EINER BRENNKRAFTMASCHINE**
FUEL INJECTION SYSTEM OF AN INTERNAL COMBUSTION ENGINE
SYSTÈME D'INJECTION DE CARBURANT D'UN MOTEUR À COMBUSTION INTERNE

(30) Priorität: 22.09.2012 DE 102012018780
(43) Veröffentlichungstag der Anmeldung: 29.07.2015
(73) Patentinhaber: Daimler AG, 70327 Stuttgart (DE)
(72) Erfinder: KADEN, Arnold, 73630 Remshalden (DE); KARL, Günter, 73732 Esslingen (DE); RÖSSLER, Klaus, 70499 Stuttgart (DE)
(74) Vertreter: JENSEN & SON
(86) Internationale Anmeldenummer: PCT/EP2013/002786
(87) Internationale Veröffentlichungsnummer: WO 2014/044380

(56) Entgegenhaltungen:
- WO-A1-2013/068121
- DE-A1-102006 037 413
- DE-A1-102009 046 001
- DE-A1-102011 016 234

## Beschreibung

Die Erfindung betrifft ein Kraftstoff-Einspritzsystem einer Brennkraftmaschine sowie eine Brennkraftmaschine mit einem solchen Kraftstoff-Einspritzsystem.

Bei Ottomotoren mit Direkteinspritzung soll im sog. Homogenbetrieb der Brennkraftmaschine mittels der Einspritzdüsen eine möglichst gute Verteilung des Kraftstoffes in der Brennkammer und eine effiziente und schadstoffarme Verbrennung des Kraftstoff-Luftgemisches erzielt werden. Zu diesem Zweck werden in herkömmlichen Kraftstoff-Einspritzsystemen meist Einspritzventile in der Art von Einspritzdüsen eingesetzt, die nach innen öffnen und die einen Kegelstrahl erzeugen. Solche Einspritzdüsen weisen üblicherweise fünf bis sieben Einspritzlöcher auf. Um eine gute Zerstäubung des Kraftstoffes zu erreichen, kann dieser mittels der Einspritzdüse unter einem Kraftstoffdruck von bis zu 20 MPa in die Brennkammer eingespritzt werden. Eine Benetzung der Wände der Brennkammer sowie der Oberflächen von Zylinderkopf und Kolben der Brennkraftmaschine aber auch der Einlassventile mit flüssigem Kraftstoff kann dabei jedoch zu unerwünschten, erhöhten Schadstoffemissionen der Brennkraftmaschine führen und sollte deshalb möglichst vermieden werden.

Entscheidend für die Vermeidung einer solchen unerwünschten Benetzung ist eine Kontrolle der Wechselwirkung des eingespritzten Kraftstoffsprays mit der Innenströmung der in den Zylinder eingebrachten Luftmasse. Beispielsweise weisen mittels eines Abgasturboladers aufgeladene Brennkraftmaschinen oftmals eine höhere Luftmassenbewegung in Form einer sog. "Tumble-Strömung" auf, wodurch die Beeinflussung der Verteilung des eingespritzten Kraftstoffs verstärkt wird. Bei Brennkraftmaschinen mit einer zentrierten Anordnung der Einspritzdüse auf dem Zylinder wird durch die Luftmassenbewegung der eingespritzte Kraftstoff auf eine Auslassseite der Brennkammer gelenkt, wodurch dort erhöhte Kraftstoffkonzentrationen entstehen können und eine unerwünschte Benetzung der Wände der Brennkammer mit Kraftstoff erfolgen kann.

Die DE 10 2009 046 001 A1 offenbart ein Kraftstoff-Einspritzsystem einer Brennkraftmaschine, mit einem Brennraum mit zumindest einem Einlassventil auf einer Einlassseite und mit zumindest einem Auslassventil auf einer Auslassseite und mit einer zentralen Einspritzdüse zum Einspritzen von Kraftstoff in den Brennraum. Die Einspritzdüse weist sechs Einspritzlöcher auf, wobei mittels zweier erster Einspritzlöcher eine erste Kraftstoffteilmenge auf die Einlassseite einspritzbar ist und mittels vier zweiter Einspritzlöcher eine zweite Kraftstoffteilmenge auf die Auslassseite einspritzbar ist. Dabei weisen Strömungskanäle zu den Einspritzlöchern jeweils einen unterschiedlichen Aufbau auf, so dass die Strömungskanäle der zwei ersten Einspritzlöcher einen größeren Strömungswiderstand aufweisen als die Strömungskanäle der vier zweiten Einspritzlöcher. Damit kann durch eine verkürzte Länge der Einspritzstrahlen der zwei ersten Einspritzlöcher eine Berührung der Zylinderwandung mit Kraftstoff vermindert werden. Allerdings kann eine Berührung der Zylinderwandung mit Kraftstoff durch die Einspritzstrahlen der vier zweiten Einspritzlöcher nicht ausgeschlossen werden.

Die DE 198 04 463 A1 beschreibt ein Kraftstoffeinspritzsystem für Ottomotoren mit einer Einspritzdüse, die Kraftstoff in einen von einer Kolben-Zylinder-Konstruktion gebildeten Brennraum einspritzt, und mit einer in den Brennraum ragenden Zündkerze. Die Einspritzdüse ist im zentralen Bereich des Brennraumes angeordnet und mit wenigstens einer Reihe von über den Umfang der Einspritzdüse verteilten Einspritzlöchern versehen, so dass mittels einer gezielten Einspritzung von Kraftstoff über die Einspritzlöcher ein strahlgeführtes Brennverfahren durch Bildung einer Gemischwolke realisiert werden kann. Gemäß diesem Brennverfahren wird wenigstens ein Kraftstoffstrahl erzeugt, der zur Zündung wenigstens annähernd in Richtung auf die Zündkerze gerichtet und so gesteuert ist, dass im Berührungsbereich mit der Zündkerze nur noch verdampfter Kraftstoff vorliegt. Zusammen mit weiteren Kraftstoffstrahlen wird wenigstens eine annähernd geschlossene und/oder zusammenhängende Gemischwolke gebildet wird, wobei es zu keiner wesentlichen Berührung der weiteren Strahlen mit dem Kolben oder der Zylinderwandung der Brennkraftmaschine kommt.

Es ist eine Aufgabe der vorliegenden Erfindung, eine verbesserte Ausführungsform für ein Kraftstoff-Einspritzsystem anzugeben, bei welcher oben genannte Nachteile beseitigt oder zumindest reduziert sind.

Die oben genannte Aufgabe wird gelöst durch den Gegenstand der unabhängigen Ansprüche. Bevorzugte Ausführungsformen sind Gegenstand der abhängigen Ansprüche.

Gemäß der Erfindung weißt die Einspritzdüse sechs Einspritzlöcher auf, wovon mittels zweier Einspritzlöcher eine erste Kraftstoffteilmenge auf die Einlassseite einspritzbar ist, mittels zweier weiterer Einspritzlöcher eine zweite Kraftstoffteilmenge auf die Auslassseite und mittels zweier weiterer Einspritzlöcher eine dritte Kraftstoffteilmenge in einen sich in der axialen Richtung erstreckenden Grenzbereich zwischen Einlassseite und Auslassseite. Die zweite Kraftstoffteilmenge ist jeweils kleiner als die erste und die dritte Kraftstoffteilmenge.Die erste Kraftstoffteilmenge ist im Wesentlichen gleich der dritten Kraftstoffteilmenge.

Die Einlass- bzw. Auslassseite kann dabei im Wesentlichen über die jeweilige Position des Einlass- bzw. Auslassventils definiert sein. Da aufgrund eines in Einspritzdüsennähe verstärkten Luftmassenstroms in Richtung Auslassseite in diesen Bereich eingespritzter Kraftstoff besonders schnell auf unerwünschte Weise die Wand der Brennkammer erreichen und dort o.g. unerwünschte Effekte bewirken kann, führt die erfindungsgemäße Reduzierung der in die Auslassseite eingespritzten Kraftstoffmenge zu einer verringerten unerwünschten Benetzung der Wandung der Brennkammer. Im Idealfall kann eine solche unerwünschte Benetzung mit Kraftstoff sogar vollständig vermieden werden. Hierdurch lassen sich insbesondere erhöhte Schadstoffemissionen vermeiden.

Vorzugsweise weist das wenigstens eine Einspritzloch für die Einlassseite einen ersten Öffnungsdurchmesser auf, der größer ist als ein zweiter Öffnungsdurchmesser des wenigstens einen Einspritzloches für die Auslassseite. Auf diese Weise kann die erfindungsgemäße Reduzierung der Kraftstoff-Einspritzmenge im Bereich der Auslassseite gegenüber der Einlassseite auf technisch einfache Weise realisiert werden. Besonders bevorzugt ist eine Ausführungsform, gemäß welcher ein Öffnungsdurchmesser eines Einspritzloches zwischen 100 µm und 250 µm beträgt.

Um eine besonders schadstoffarme Verbrennung von in die Brennkammer eingespritztem Kraftstoff sicherzustellen, kann die Einspritzdüse in einer weiterbildenden Ausführungsform derart ausgebildet sein, dass in den Brennraum eingespritzter Kraftstoff weder auf eine Brennraumwand noch auf einen Kolben der Brennkraftmaschine trifft.

Zur besonders effektiven Verbrennung des in die Brennkammer eingespritzten Kraftstoffs kann in einer weiterbildenden Ausführungsform daran gedacht sein, dass die Einspritzlöcher derart angeordnet sind , dass ein Kraftstoffstrahl mit einer kegelartigen Strahlgeometrie erzeugt wird, wobei der Kraftstoffstrahl einen Öffnungswinkel von Im Wesentlichen 80° aufweist.

Eine unerwünschte Benetzung der Wände der Brennkammer kann in einer bevorzugten Ausführungsform auch dadurch vermieden werden, dass die Einspritzdüse auf einer Achse des Brennraums angeordnet ist oder/und die Einspritzdüse unter einem Winkel von 0° ≤ϕ ≤20° bezüglich der Achse des Brennraums angeordnet ist.

In einer besonders verbrauchseffizienten Ausführungsform kann die erste Kraftstoffteilmenge ca. 42 %, die zweite Kraftstoffteilmenge ca. 18% und die dritte Kraftstoffteilmenge ca. 40% der insgesamt eingebrachten Kraftstoffmenge betragen. Hierdurch kann eine besonders günstige Gemischbildung bei hohem Wirkungsgrad und der Vermeidung der Benetzung der Zylinderwandung erreicht werden.

Vorzugsweise kann eine Länge zumindest eines Einspritzloches ca. 200 µm betragen. Auf diese Weise kann Kraftstoff besonders effektiv in die Brennkammer eingespritzt werden.

Die Erfindung betrifft auch eine Brennkraftmaschine mit einem Kraftstoff-Einspritzsystem mit einem oder mehreren der vorhergehend genannten Merkmale.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1: einen Längsschnitt eines erfindungsgemäßen Kraftstoff-Einspritzsystems im Bereich eines Brennraums,
- Fig. 2: eine Kraftstoffverteilung in einem Brennraum des Kraftstoff-Einspritzsystems der Figur 1,
- Fig. 3: eine Variante der Figur 1.

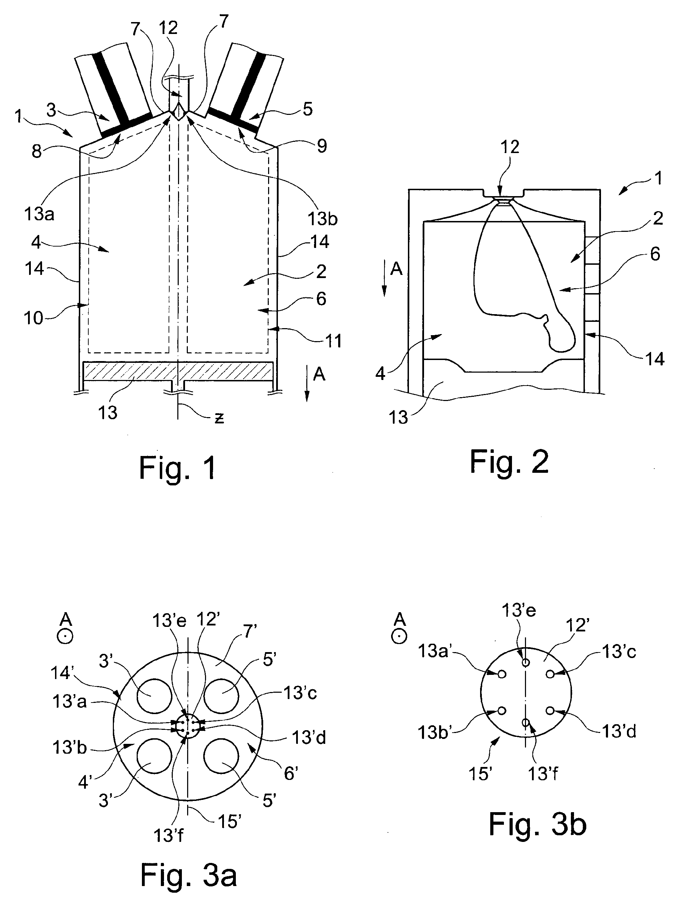

In der Darstellung der Figur 1 ist ein Längsschnitt eines erfindungsgemäßen Kraftstoff-Einspritzsystems einer Brennkraftmaschine grobschematisch dargestellt und mit 1 bezeichnet. Das Kraftstoff-Einspritzsystem 1 umfasst einen Brennraum 2 mit einem Einlassventil 3 auf einer Einlassseite 4 des Brennraums 2 und ein Auslassventil 5 auf einer Auslassseite 6 des Brennraums 2. In dem Brennraum 2 ist ein auf- und abbewegbarer Kolben 13 angeordnet. Der Brennraum 2 ist üblicherweise zylindrisch ausgebildet und im Bereich des Zylinderkopfes über eine Stirnseite 7 abgeschlossen, wobei in der Stirnseite 7 eine Einlassventil-Aufnahmeöffnung 8 und eine Auslassventil-Aufnahmeöffnung 9 vorgesehen sein können, in welche jeweils das Einlassventil 3 bzw. das Auslassventil 5 eingesetzt ist.

Von der Einlassseite 4 und der Auslassseite 6 können sich jeweils von der Einlassventil-Aufnahmeöffnung 8 bzw. Auslassventil-Aufnahmeöffnung 9 weg in einer axialen Richtung A erstreckende Volumenbereiche 10, 11 (vgl. gestrichelte Linien in der Figur 1) des Brennraums 2 erstrecken. Erfindungsgemäß umfasst das Kraftstoff-Einspritzsystem 1 eine zentrale Einspritzdüse 12 zum Einspritzen von Kraftstoff in den Brennraum 2, die im Wesentlichen mittig auf der Stirnseite 7 des Brennraums 2 angeordnet ist. Die Einspritzdüse 12 ist vorzugsweise auf einer sich in der axialen Richtung A erstreckenden (Mittel-)Achse Z des Brennraums 2 angeordnet. In einer der Übersichtlichkeit halber in der Figur 1 nicht gezeigten Variante kann die Einspritzdüse 12 aber auch unter einem Winkel von 0° bis 20° bezüglich der Achse Z geneigt angeordnet sein.

Die Einspritzdüse 12 weist zumindest zwei Einspritzlöcher 13a, 13b auf, wobei eine Länge zumindest eines der beiden Einspritzlöcher 13a, 13b ca. 200 µm beträgt. In Varianten kann selbstverständlich auch eine andere Anzahl an Einspritzlöchern vorgesehen sein. Die beiden Einspritzlöcher 13a, 13b sind derart in der Einspritzdüse 12 angeordnet, dass eine auf die Auslassseite 6, insbesondere in den Bereich 11, eingespritzte Kraftstoffmenge geringer ist als eine auf die Einlassseite 4, insbesondere in den Bereich 10, eingespritzte Kraftstoffmenge. Eine derartige Verteilung kann durch eine geeignete Anordnung der Einspritzlöcher 13a, 13b auf der Einspritzdüse 12 erreicht werden, wie sie schematisch in der Figur 1 gezeigt ist.

Der von dem Einspritzloch 13a in den Brennraum 2 eingespritzte Kraftstoff wird mittels einer geeigneten geometrischen Anordnung des ersten Einspritzungslochs 13a im Wesentlichen in den Bereich 10 (Einlassseite 4) eingespritzt, der von dem Einspritzloch 13b in den Brennraum 2 eingespritzte Kraftstoff hingegen in erster Linie in den Bereich 11 (Auslassseite 6).

Durch eine geeignete jeweilige Wahl der Öffnungsdurchmesser da, db der beiden Einspritzlöcher 13a, 13b kann nun erreicht werden, dass in den Bereich 10 (Einlassseite 4) ein größerer relativer Anteil des gesamten in den Brennraum 2 eingespritzten Kraftstoffs eingespritzt wird als in den Bereich 11 (Auslassseite 6). Um dies zu erreichen, kann der Öffnungsdurchmesser da größer sein als der Öffnungsdurchmesser db. Vorzugsweise können die Öffnungsdurchmesser der Einspritzlöcher 13a, 13b Werte im Bereich von 100 µm und 250 µm annehmen. Selbstverständlich ist vorangehend erläuterte Auslegung der Einspritzlöcher 13a, 13b nur exemplarisch anzusehen.

In Varianten kann grundsätzlich auch daran gedacht sein, Einspritzlöcher 13a, 13b mit identischem Öffnungsdurchmesser vorzusehen, wobei die erfindungsgemäße Einspritzung - bei der die auf die Auslassseite eingespritzte Kraftstoffmenge geringer ist als die auf die Einlassseite 4 eingespritzte Kraftstoffmenge - alleine aufgrund einer geeigneten Anordnung bzw. Ausrichtung der Einspritzlöcher 13a, 13b erzielt wird. In weiteren Varianten des Ausführungsbeispiels kann selbstverständlich auch eine andere Anzahl an Einspritzlöchern 13a, 13b vorgesehen sein, um die erfindungsgemäße Einspritzung von Kraftstoff zu realisieren. Beispielsweise kann daran gedacht sein, in einer Variante des Ausführungsbeispiels in der Einspritzdüse 12 insgesamt fünf Einspritzlöcher vorzusehen, wobei mittels dreier dieser fünf Einspritzlöcher Kraftstoff auf die Einlassseite 4 und mittels der zwei verbleibenden Einspritzlöcher Kraftstoff auf die Auslassseite 6 eingespritzt wird.

Vorzugsweise sind die Einspritzdüse 12 und insbesondere deren Einspritzlöcher 13a, 13b derart ausgebildet, dass in den Brennraum 2 eingespritzter Kraftstoff weder auf eine Brennraum-Wand 14 (insbesondere im Bereich der Auslassseite 6) des Brennraums 2 noch auf den Kolben 13 trifft.

In der Figur 2 ist eine Kraftstoffverteilung von mittels des erfindungsgemäßen Kraftstoff-Einspritzsystems 1 in den Brennraum 2 eingespritztem Kraftstoff gezeigt. Aus der Figur 2 lässt sich sofort entnehmen, dass auf die Brennraum-Wand 14 kein Kraftstoff trifft, so dass diese nicht auf unerwünschte Weise mit Kraftstoff benetzt wird. Gleiches gilt für den in der Figur 2 gezeigten Kolben 13 der Brennkraftmaschine.

Die Figur 3a zeigt nun eine Variante des Kraftstoff-Einspritzsystems 1' mit zwei Einlassventilen 3' und zwei Auslassventilen 5' sowie einer sechs Einspritzlöcher 13'a, 13'b, 13'c, 13'd, 13'e, 13'f aufweisenden Einspritzdüse 12'. Die Figur 3a zeigt dabei die Stirnseite 7' in einer Draufsicht von innerhalb des Brennraums 2 aus. Die Figur 3b zeigt eine vergrößerte Ansicht der Einspritzdüse 12'. Die Einspritzdüse 12' weist sechs Einspritzlöcher 13'a bis 13'f auf, wovon mittels zweier Einspritzlöcher 13'a, 13'b eine erste Kraftstoffteilmenge auf die Einlassseite 4' eingespritzt wird, während mittels zweier weiterer Einspritzlöcher 13'c, 13'd eine zweite Kraftstoffteilmenge auf die Auslassseite 6' und mittels zwei Einspritzlöcher 13'e, 13'f eine dritte Kraftstoffteilmenge in einen sich in der axialen Richtung A erstreckenden Grenzbereich 15' zwischen Einlassseite 4' und Auslassseite 6' eingespritzt wird. Gemäß dieser Variante ist die zweite Kraftstoffteilmenge jeweils kleiner als die erste und die dritte Kraftstoffteilmenge; so kann die erste Kraftstoffteilmenge ca. 42 %, die zweite Kraftstoffteilmenge ca. 18% und die dritte Kraftstoffteilmenge ca. 40% der insgesamt eingebrachten Kraftstoffmenge betragen. Alternativ dazu kann die erste Kraftstoffteilmenge im Wesentlichen gleich der dritten Kraftstoffteilmenge sein.

Bei Verwendung von mehr als zwei Einspritzlöchern sind, wie zum Beispiel der Einspritzdüse 12' mit seinen sechs Einspritzlöchern 13'a, 13'b, 13'c, 13'd, 13'e, 13'f der Figuren 3a und 3b, die Einspritzlöcher derart angeordnet, dass es einen Kraftstoffstrahl mit einer kegelartigen Strahlgeometrie erzeugt, wobei der Kraftstoffstrahl einen Öffnungswinkel von im Wesentlichen 80° aufweist

## Patentansprüche

1. Kraftstoff-Einspritzsystem (1') einer Brennkraftmaschine mit einem Brennraum (2) mit zumindest einem Einlassventil (3') auf einer Einlassseite (4') und mit zumindest einem Auslassventil (5') auf einer Auslassseite (6') und mit einer zentralen Einspritzdüse (12') zum Einspritzen von Kraftstoff in den Brennraum (2) wobei die Einspritzdüse (12') sechs Einspritzlöcher (13'a, 13'b, 13'c, 13'd, 13'e, 13'f) aufweist, wobei
- mittels zweier Einspritzlöcher (13'a, 13'b) eine erste Kraftstoffteilmenge auf die Einlassseite (4') einspritzbar ist,
- mittels zweier Einspritzlöcher (13'c, 13'd) eine zweite Kraftstoffteilmenge auf die Auslassseite (6') einspritzbar ist,
- mittels zweier Einspritzlöcher (13'e, 13'f) eine dritte Kraftstoffteilmenge in einen sich in der axialen Richtung (A) erstreckenden Grenzbereich (15') zwischen Einlassseite (4') und Auslassseite (6') einspritzbar ist,
**dadurch gekennzeichnet, dass**
- die zweite Kraftstoffteilmenge jeweils kleiner ist als die erste und die dritte Kraftstoffteilmenge und
- die erste Kraftstoffteilmenge im Wesentlichen gleich der dritten Kraftstoffteilmenge ist

2. Kraftstoff-Einspritzsystem (1') nach Anspruch 1,
**dadurch gekennzeichnet, dass**
die Einspritzdüse (12') derart ausgebildet ist, dass in den Brennraum (2) eingespritzter Kraftstoff weder auf eine Brennraumwand (14') noch auf einen Kolben (13) trifft.

3. Kraftstoff-Einspritzsystem (1') nach Anspruch 1 oder 2,
**dadurch gekennzeichnet, dass**
die Einspritzlöcher (13'a, 13'b, 13'c, 13'd, 13'e, 13'f) derart angeordnet sind, dass ein Kraftstoffstrahl mit einer kegelartigen Strahlgeometrie erzeugt wird, wobei der Kraftstoffstrahl einen Öffnungswinkel von im Wesentlichen 80° aufweist.

4. Kraftstoff-Einspritzsystem (1') nach einem der vorhergehenden Ansprüche, **dadurch gekennzeichnet, dass**
- die Einspritzdüse (12') auf einer Achse (Z) des Brennraums (2) angeordnet ist, und/oder
- die Einspritzdüse (12') unter einem Winkel von 0° ≤ϕ ≤20° bezüglich der Achse (Z) des Brennraums (2) angeordnet ist.

5. Kraftstoff-Einspritzsystem (1') nach einem der vorhergehenden Ansprüche,
**dadurch gekennzeichnet, dass**
die erste Kraftstoffteilmenge ca. 42%, die zweite Kraftstoffteilmenge ca. 18% und die dritte Kraftstoffteilmenge ca. 40% der insgesamt eingebrachten Kraftstoffmenge beträgt.

6. Kraftstoff-Einspritzsystem (1') nach einem der vorhergehenden Ansprüche., **dadurch gekennzeichnet, dass**
eine Länge zumindest eines Einspritzloches (13'a, 13'b, 13'c, 13'd, 13'e, 13'f) ca. 200 µm beträgt.

7. Brennkraftmaschine mit einem Kraftstoff-Einspritzsystem (1') nach einem der vorhergehenden Ansprüche.

## Claims

1. Fuel injection system (1') of an internal combustion engine, having a combustion chamber (2), with at least one intake valve (3') on an intake side (4') and at least one exhaust valve (5') on an exhaust side (6') and having a central injection nozzle (12') for injecting fuel into the combustion chamber (2), wherein the injection nozzle (12') has six injection holes (13'a, 13'b, 13'c, 13'd, 13'e, 13'f), wherein
- a first partial quantity of fuel can be injected onto the intake side (4') by means of two injection holes (13'a, 13'b),
- a second partial quantity of fuel can be injected onto the exhaust side (6') by means of two injection holes (13'c, 13'd),
- a third partial quantity of fuel can be injected by means of two injection holes (13'e, 13'f) into a boundary region (15'), extending in the axial direction (A), between the intake side (4') and the exhaust side (6'),
**characterised in that**
- the second partial quantity of fuel is in each case smaller than the first and the third partial quantity of fuel and
- the first partial quantity of fuel is substantially equal to the third partial quantity of fuel.

2. Fuel injection system (1') according to claim 1,
**characterised in that**
the injection nozzle (12') is designed so that fuel injected into the combustion chamber (2) does not come into contact with a combustion chamber wall (14') or a piston (13).

3. Fuel injection system (1') according to claim 1 or 2,
**characterised in that**
the injection holes (13'a, 13'b, 13'c, 13'd, 13'e, 13'f) are arranged such that a fuel jet with a conical jet geometry is produced, wherein the fuel jet has an opening angle of substantially 80°.

4. Fuel injection system (1') according to one of the preceding claims,
**characterised in that**
- the injection nozzle (12') is arranged on an axis (Z) of the combustion chamber (2),
and / or
- the injection nozzle (12') is arranged at an angle of 0° ≤ϕ ≤20° with respect to the axis (Z) of the combustion chamber (2).

5. Fuel injection system (1') according to one of the preceding claims,
**characterised in that**
the first partial quantity of fuel is approximately 42%, the second partial quantity of fuel is approximately 18% and the third partial quantity of fuel is approximately 40% of the total quantity of fuel introduced.

6. Fuel injection system (1') according to one of the preceding claims,
**characterised in that**
a length of at least one injection hole (13'a, 13'b, 13'c, 13'd, 13'e, 13'f) is approximately 200 µm.

7. Internal combustion engine having a fuel injection system (1') according to one of the preceding claims.

## Revendications

1. Système d'injection de carburant (T) d'un moteur à combustion interne comprenant une chambre de combustion (2) dotée d'au moins une soupape d'admission (3') disposée sur un côté d'admission (4') et d'au moins une soupape de sortie (5') disposée sur un côté de sortie (6') et d'un injecteur central (12') destiné à injecteur le carburant dans la chambre de combustion (2)
- l'injecteur (12') présentant six orifices d'injection (13'a, 13'b, 13'c, 13'd, 13'e, 13'f),
- une première quantité partielle de carburant pouvant être injectée par deux injecteurs (13'a, 13'b) sur le côté d'admission,
- une deuxième quantité partielle de carburant pouvant être injectée par deux injecteurs (13'c, 13'd) sur le côté sortie,
- une troisième quantité partielle de carburant pouvant être injectée par deux injecteurs (13'e, 13'f) dans une zone de limite (15') s'étendant dans la direction axiale (A) entre le côté d'admission (4') et le côté sortie (6'), **caractérisé en ce que** la deuxième quantité partielle de carburant est respectivement inférieure à la première et à la troisième quantité partielle de carburant et
- la première quantité partielle de carburant est essentiellement égale à la troisième quantité partielle de carburant.

2. Système d'injection de carburant (1) selon la revendication 1, **caractérisé en ce que** l'injecteur (12) est conçu de telle sorte que dans la chambre de combustion (2) le carburant injecté atteigne soit une paroi (14') de la chambre de combustion soit un piston (13).

3. Système d'injection de carburant (1) selon la revendication 1, caractérisé en ce les orifices d'injection (13'a, 13'b, 13'c, 13'd, 13'e, 13'f) sont conçus de telle sorte qu'un jet de carburant soit produit selon une géométrie de jet conique, le jet de carburant présentant un angle d'ouverture d'essentiellement 80°.

4. Système d'injection de carburant (1) selon l'une quelconque des revendications précédentes, caractérisé en ce
- l'injecteur (12') est disposé sur l'axe (Z) de la chambre de combustion (2) et/ou
- l'injecteur (12') est disposé selon un angle compris entre 0° ≤ ϕ ≤20° par rapport à l'axe (Z) de la chambre de combustion (2).

5. Système d'injection de carburant (1) selon l'une quelconque des revendications précédentes, caractérisé en ce la première quantité partielle de carburant s'élève à environ 42 %, la deuxième quantité partielle de carburant s'élève à environ 18 % et la troisième quantité partielle de carburant s'élève à environ 40 % de la quantité totale de carburant amenée.

6. Système d'injection de carburant (1) selon l'une quelconque des revendications précédentes, **caractérisé en ce qu'**une longueur d'au moins un orifice d'injecteur (13'a, 13'b, 13'c, 13'd, 13'e, 13'f) s'élève à environ 200 µm.

7. Moteur à combustion interne comprenant un système d'injection de carburant (1) selon l'une quelconque des revendications précédentes.
